# EUROPÄISCHE PATENTANMELDUNG

(11) **EP 0 960 651 A2**
(43) Veröffentlichungstag der Anmeldung: **01.12.1999**
(21) Anmeldenummer: 99810426.9
(22) Anmeldetag: 14.05.1999
(51) Int. Cl.: B01F 7/18, B01D 19/00

(54) **Vorrichtung zum Mischen und Entgasen einer fliessfähigen Masse**

(30) Priorität: 25.05.1998 DE 19823232
(71) Anmelder: MICAFIL AG, 8048 Zürich (CH)
(72) Erfinder: Gmeiner, Paul, 8966 Lieli (CH)
(74) Vertreter: Kaiser, Helmut, Dr.

(57) **Zusammenfassung**

Die Vorrichtung dient dem Mischen und Entgasen einer fliessfähigen Masse (5), insbesondere eines füllstoffenthaltenden Giessharzes. Sie weist einen zylinderförmig ausgebildeten Behälter (1) mit einer von oben eingeführten Welle (12) auf. Der Behälter (1) umschliesst einen die zu entgasende Masse (5) lagemden und erste Rührelemente (8) aufnehmenden oberen Teilbehälter (4), einen zweite Rührelemente (22) aufnehmenden und entgaste Masse (21) puffemden unteren Raum (20) und einen zwischen Lagerbehälter (6) und Pufferraum (20) angeordneten mittleren Behälterabschnitt (19), in dem ein Verteilteller (15) sowie ein vom Verteilteller (15) mit zu entgasender Masse (5) beaufschlagtes heiz- und kühlbaren Dünnschicht-Entgasungssystem (16) vorgesehen sind. An der Welle (12) sind der Verteilteller (15) und die ersten (8) und zweiten Rührelemente (22) befestigt.

Diese Vorrichtung zeichnet sich durch einen grossen Massendurchsatz, eine flexible Arbeitsweise und besonders kurze Anfahr- und Abstellzeiten aus.

## Beschreibung

### TECHNISCHES GEBIET

Bei der Erfindung wird ausgegangen von einer Vorrichtung zum Mischen und Entgasen einer fliessfähigen Masse nach dem Oberbegriff von Patentanspruch 1.

Eine solche Vorrichtung dient dem Aufbereiten einer giessfähigen Masse unmittelbar bevor die Masse in einer Giessapparatur in Formen abgegossen wird. In dieser Vorrichtung wird die Masse wirkungsvoll entgast und durchmischt. Unerwünschte Gaseinschlüsse in der zu vergiessenden Masse und ein Entmischen der Masse, beispielsweise eine Sedimentation in einem füllstoffenthaltenden Giessharz, werden so vermieden.

### STAND DER TECHNIK

Eine Misch- und Entgasungsvorrichtung der vorgenannten Art ist in EP 0 816 034 A1 beschrieben. Diese Vorrichtung weist einen zylinderförmig ausgebildeten, evakuierbaren Behälter auf, dessen Behälterachse im wesentlichen in vertikaler Richtung ausgerichtet ist, eine längs der Behälterachse geführte und einen Teller zum Verteilen von zu entgasender Masse haltende Welle sowie Elemente zum Rühren von zu entgasender Masse und Elemente zum Rühren von entgaster Masse. Der Behälter weist einen zu entgasende Masse lagernden oberen und einen entgaste Masse puffernden unteren Raum auf sowie einen zwischen Lager- und Pufferraum angeordneten mittleren Behälterabschnitt. Im mittleren Behälterabschnitt sind der Verteilteller sowie ein vom Verteilteller mit zu entgasender Masse beaufschlagtes heiz- und kühlbaren Dünnschicht-Entgasungssystem vorgesehen, welches den überwiegenden Teil des zwischen der Welle und der Wand des Behälters vorhandenen Raums einnimmt.

Bei dieser Vorrichtung nimmt das Dünnschicht-Entgasungssystem einen grossen Teil des Behälterinneren ein. Es kann daher die beim Entgasen in dünner Schicht vorliegende Masse auf eine grosse Oberfläche verteilt werden, wodurch ein erwünscht hoher Massendurchsatz erzielt wird.

### KURZE DARSTELLUNG DER ERFINDUNG

Der Erfindung, wie sie in den Patentansprüchen definiert ist, liegt die Aufgabe zugrunde, eine Vorrichtung der eingangs genannten Art anzugeben, welche sich trotz eines hohen Massendurchsatzes durch einen einfachen Aufbau auszeichnet.

Bei der Misch- und Entgasungsvorrichtung nach der Erfindung sind die die entgaste Masse im Pufferraum bewegenden Rührelemente direkt an der Welle befestigt. Das Dünnschicht-Entgasungssystem hintergreifende und zwischen Behälterwand und Dünnschicht-Entgasungssystem oder zwischen Dünnschicht-Entgasungssystem und Welle geführte Abschnitte der Rührelemente können daher enffallen. Das Dünnschicht-Entgasungssystem kann nun den gesamten Raum zwischen der Welle und der Behälterwand einnehmen, wodurch der Massendurchsatz erhöht werden kann. Da die Welle zudem den Verteilteller sowie die Rührelemente für die zu entgasende Masse und für die entgaste Masse trägt, wird lediglich ein einziger Antrieb zum Betrieb der Anlage benötigt. Die Vorrichtung zeichnet sich daher durch eine hohe Fabrikationsflexibiltät aus. Sie weist eine hohe Betriebsicherheit auf und kann innerhalb kurzer Zeit angefahren und abgestellt werden. Zudem ist der Antrieb in wartungstechnisch vorteilhafter Weise oberhalb einer Wellendurchführung des Behälters angeordnet.

Vorzugsweise weist die Welle ein in den Pufferraum geführtes freies Ende auf. Es entfällt dann zum einen eine im Pufferraum angeordnete und daher störanfällige Lagerstelle und können zum anderen die Elemente zum Rühren der entgasten Masse direkt an der Welle befestigt werden.

### KURZE BESCHREIBUNG DER ZEICHNUNGEN

Diese und weitere Vorteile der Erfindung werden nachfolgend anhand einer Zeichnung näher erläutert. Hierbei zeigt die einzige Figur eine Aufsicht auf einen axial geführten Schnitt durch einen zylinderförmig ausgebildeten Behälter einer Misch- und Entgasungsvorrichtung nach der Erfindung.

### WEG ZUR AUSFÜHRUNG DER ERFINDUNG

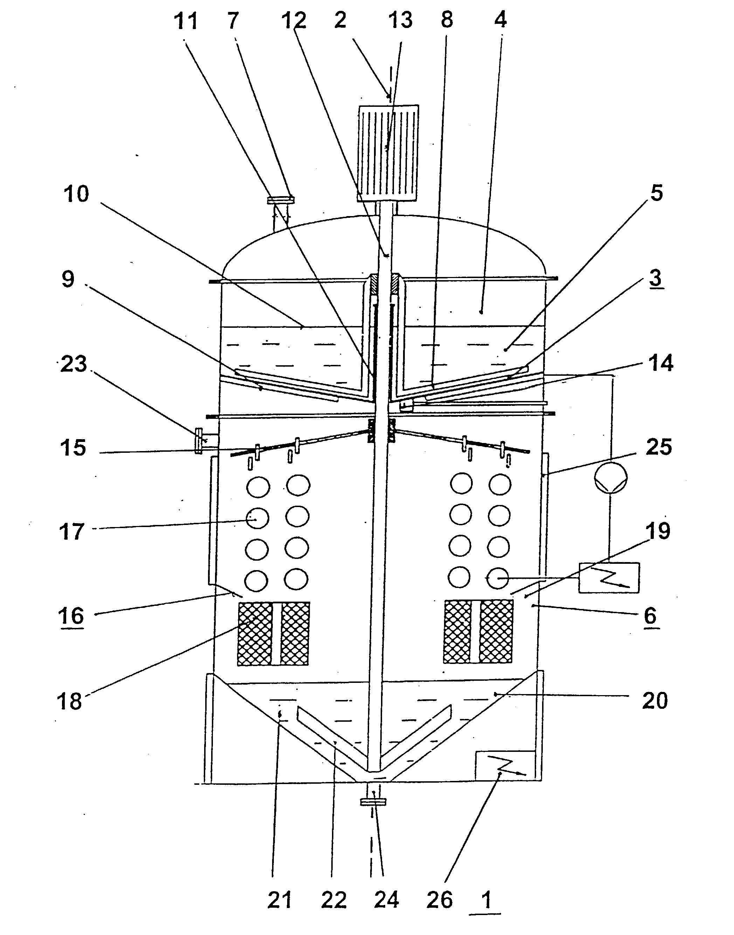

Die in Fig.1 dargestellte Misch- und Entgasungsvorrichtung weist einen zylinderförmig ausgebildeten, evakuierbaren Behälter auf, dessen Behälterachse 2 im wesentlichen in vertikaler Richtung ausgerichtet ist. Dieser Behälter ist durch eine Trennwand 3 unterteilt in einen Lagerbehälter 4 für zu entgasende, fliessfähige Masse 5, wie etwa eine Mischung zweier füllstofffreier oder füllstoffenthaltender Flüssigkeiten, beispielsweise eine reaktive füllstoffenthaltende Giessharzmasse, und einen Durchlaufbehälter 6 zur Aufbereitung dieser Masse durch Entgasen und Mischen. Die Masse 5 kann über einen Einlass 7 in den Lagerbehälter 4 eingebracht werden. Mit Hilfe von Rührelementen 8 kann die in den Lagerbehälter 4 eingebrachte Masse durchmischt und mit Hilfe einer Heiz- und Kühlvorrichtung 9 erwärmt oder gekühlt werden. In der als Boden des Lagerbehälters 4 wirkenden Trennwand 3 ist flüssigkeits- und gasdicht ein längs der Behälterachse 2 in den Lagerbehälter 4 geführter und oberhalb des Niveaus 10 der zu entgasenden Masse 5 endender Rohrabschnitt 11 eingeformt. Der Rohrabschnitt 11 ist als Lager einer auf der Behälterachse 2 geführten Welle 12 ausgebildet, welche von aussen gasdicht in den Behälter geführt und von einem auf einem Deckel des Behälter 1 angeordneten und daher leicht zugänglichen Antrieb 13 angetrieben wird. Der zwischen der Wand des Behälters 2 und dem Rohrabschnitt 11 angeordnete Teil des Bodens 3 des Lagerbehälters 4 ist von aussen nach innen konusförmig vertieft ausgebildet und weist an einer an den Rohrabschnitt 11 angrenzenden tiefsten Stelle eine steuerbare Öffnung 14 zum Abziehen von zu entgasender Masse 5 auf. Der als Trennwand 3 wirkende Boden des Lagerbehälters 4 ist heiz- und kühlbar ausgebildet. Zu diesem Zweck ist die Heiz- und Kühlvorrichtung 9 im Durchlaufraum 6 unmittelbar unter dem Boden 3 bzw.der Trennwand angeordnet. Die Rührelementen 8 sind direkt an der Welle 12 befestigt und bis dicht an den Boden 3 und die Aussenwand des Lagerbehälters 4 geführt, wodurch eine gute Durchmischung der zu entgasenden, fliessfähigen Masse 5 sichergestellt ist.

Von der steuerbaren Öffnung 14 wird die zu entgasende Masse 5 auf einen an der axial geführten Welle 12 befestigten Teller 15 geführt. Dieser Teller ist im wesentlichen kegelförmig ausgebildet. Die Spitze des Kegels ist an der Welle 12 befestigt, während der die Oberfläche des Tellers 15 bildende Kegelmantel sich mit geringem Gefälle bis nahe an die innere Wand des Durchlaufbehälters 6 hin erstreckt. Der Teller 15 dient dem Verteilen und dem Dünnschicht-Entgasen von aus der steuerbaren Öffnung 14 tretender Masse 5.

Unterhalb des Verteiltellers 15 ist ein im Durchlaufbehälter 6 feststehend installiertes heiz- und kühlbares Dünnschicht-Entgasungssystem 16 angeordnet. Dieses Dünnschicht-Entgasungssystem 16 weist zwei horizontal übereinander angeordnete Stufen 17, 18 auf, von denen die unter dem Verteilteller 15 angeordnete obere Stufe 17 heizbar und die unter der oberen Stufe 17 angeordnete untere Stufe 18 heiz- und kühlbar ausgebildet ist. Die Stufen 17 bzw. 18 können jeweils in axialer Richtung ausgerichtete und jeweils als Säule ausgebildete Heiz- bzw. Heiz- und Kühlelemente mit oberflächenvergrössernden, beispielsweise von einer Keramik gebildeten, Elementen enthalten. Wie aus dem Stand der Technik bekannt, können sie aber auch in koaxialer Anordnung zwei, drei oder noch mehr Heiz- bzw. Heiz- und Kühlspiralen mit in axialer Richtung voneinander beabstandeten Rohrwindungen aufweisen. Das Dünnschicht-Entgasungssystem 16 kann so den gesamten Teil des zwischen der Welle 12 und der Wand des Durchlaufbehälters 6 vorhandenen Raums einnehmen.

Der Durchlaufbehälter 6 ist unterteilt in einen mittleren Behälterabschnitt 19, in dem der Verteilteller 15 sowie das vom Verteilteller 15 mit zu entgasender Masse 5 beaufschlagte heiz- und kühlbare Dünnschicht-Entgasungssystem 16 vorgesehen sind, und einen sich nach unten anschliessenden Pufferraum 20, in dem Masse 21 gepuffert wird, welche im mittleren Behälterabschnitt 19 entgast worden ist.

An einem im Pufferraum 20 befindlichen freien Ende der Welle 12 sind Rührelemente 22 befestigt, welche in den Bodenbereich des Pufferraums geführt sind und für eine gute Durchmischung der entgasten Masse 21 sorgen. Oberhalb des Verteiltellers 15 mündet im mittleren Behälterabschnitt 19 ein Vakuumanschluss 23 in den Durchlaufbehälter 6. Im Bodenbereich des Pufferraums ist ein axialsymmetrisch aus dem Behälter 1 geführter Stutzen 24 zum Auslassen der entgasten und durchmischten Masse angeordnet. Mit den Bezugszeichen 25 bzw. 26 sind dem Aufheizen und Kühlen des mittleren Behälterabschnitt 19 bzw. des Pufferraums 20 dienende Heiz- und Kühlelemente bezeichnet.

Die Wirkungsweise dieser Misch- und Entgasungsvorrichtung ist wie folgt: Im Lagerbehälter 4 gespeicherte und gegebenenfalls gekühlte Masse 5 wird mittels der Heiz- und Kühlvorrichtung 9 auf eine Temperatur erwärmt, bei der sie eine relativ geringe Zähigkeit aufweist und gut fliessfähig ist. Nach Einschalten des Antriebs 13 werden die Welle 12 und damit auch die Rührelemente 8, der Verteilteller 15 und die Rührelemente 22 um die Behälterachse 2 gedreht. Die Rührelemente 8 homogenisieren nun die zu entgasende Masse 5. Der die Welle 12 führende Rohrabschnitt 11 befindet sich stets oberhalb des Niveaus 10 der zu entgasenden, fliessfähigen Masse 5. Hierdurch ist sichergestellt, dass das die Welle 12 im Rohrabschnitt 11 führende Lager dem Zugriff der gebenenfalls chemisch aggressiven Masse 5 entzogen ist.

Die homogenisierte Masse 5 wird über die steuerbare Öffnung 14 in den über den Vakuumanschluss 23 mit einer Vakuumquelle verbundenen Durchlaufbehälter 6 geführt. Herrscht ober- und unterhalb der Trennwand der gleiche Druck, beispielsweise atmosphärischer Druck oder Unterdruck, so wird die Masse durch die Schwerkraft bewegt. Herrscht im Durchlaufbehälter Unterdruck und im Lagerbehälter atmosphärischer Druck (vakuumfestes Lager), so wird die Masse zusätzlich durch die Druckdifferenz in den Durchlaufbehälter 6 geführt. Die aus der Öffnung 14 austretende Masse 5 trifft im Bereich der Spitze auf den sich drehenden Verteilteller 15. Die Temperatur der Masse und entsprechend auch des Inneren des Durchlaufbehälters 6 sind derart eingestellt, dass die Masse 5 in Form dünner Schichten über die Oberfläche des Verteiltellers 15 von innen nach aussen fliesst. Daher wird - wie aus den Stand der Technik bekannt ist - die zu entgasende Masse über die gesamte Oberfläche des Tellers 15 verteilt und über geeignet angeordnete Leitbleche und Schlitze an die Heizspiralen der oberen Stufe 17 des Dünnschicht-Entgasungssystems 16 und auch an die Wand des Behälters 1 geführt. Die Masse 5 umströmt die Rohrwindungen und die Behälterwand von oben nach unten in Form dünner Schichten.

Die Heizspiralen der Stufe 17 und die Innenwand des mittleren Behälterabschnitts 19 werden auf einer Temperatur gehalten, die gerade ausreicht, um ein Fliessen in einer dünnen Schicht zu gewährleisten. Während des Fliessens in dünnen Schichten wird die Masse 5 wirkungsvoll entgast. Die entgaste Masse kann an den Heiz- und Kühlspiralen der unteren Stufe 18 noch weiter entgast werden.

Die entgaste Masse 21 wird Pufferraum 20 gesammelt und mit den Rührelementen 22 vor allem im Bodenbereich des Pufferraums wirkungsvoll homogenisiert und danach bei Bedarf über den Auslassstutzen 24 zu einer Giessapparatur geführt. Die Heiz- und Kühlspiralen der unteren Stufe 18 des Dünnschicht-Entgasungssystems 16 können ebenso wie die Heiz- und Kühlvorrichtung 25 bei Bedarf gekühlt werden, um so durch Abkühlen die Standzeit der entgasten Masse 21 zu verlängern.

Da der gesamte Innenraum des Durchlaufbehälters 6 mit Elementen des Dünnschicht-Entgasungssystems 16 ausgefüllt werden kann, ist es möglich, mit der Vorrichtung nach der Erfindung innerhalb einer kurzen Zeitspanne eine grosse Massenmenge zu entgasen. Wegen der Befestigung der Rührelemente 8 und 22 sowie des Verteiltellers 15 an der Welle 12 zeichnet sich die Vorrichtung nach der Erfindung durch einen einfachen Aufbau, einen sicheren Betrieb und kurze Anfahr- und Abstellzeiten aus.

### BEZUGSZEICHENLISTE

- 1: Behälter
- 2: Behälterachse
- 3: Trennwand, Boden
- 4: Lagerbehälter
- 5: zu entgasende Masse
- 6: Durchlaufbehälter
- 7: Einlass
- 8: Rührelemente
- 9: Heiz- und Kühlvorrichtung
- 10: Niveau
- 11: Rohrabschnitt
- 12: Welle
- 13: Antrieb
- 14: Öffnung
- 15: Verteilteller
- 16: Dünnschicht-Entgasungssystem
- 17,18: Stufen
- 19: mittleren Behälterabschnitt
- 20: Pufferraum
- 21: entgaste Masse
- 22: Rührelemente
- 23: Vakuumanschluss
- 24: Stutzen
- 25, 26: Heiz- und Kühlvorrichtung

## Patentansprüche

1. Vorrichtung zum Mischen und Entgasen einer fliessfähigen Masse (5), insbesondere eines füllstoffenthaltenden Giessharzes, mit einem zylinderförmig ausgebildeten, evakuierbaren Behälter (1), dessen Behälterachse (2) im wesentlichen in vertikaler Richtung ausgerichtet ist, mit einer längs der Behälterachse (2) geführten und einen Teller (15) zum Verteilen von zu entgasender Masse (5) haltenden Welle (12), mit ersten Elementen (8) zum Rühren von zu entgasender Masse (5) und mit zweiten Elementen (22) zum Rühren von entgaster Masse (21), bei der der Behälter (1) einen zu entgasende Masse (5) lagernden oberen Teilbehälter (4), einen die ersten Rührelemente (8) aufnehmenden und entgaste Masse (21) puffernden unteren Raum (20) sowie einen zwischen Lagerbehälter (4) und Pufferraum (20) angeordneten mittleren Behälterabschnitt (19) aufweist, in dem der Verteilteller (15) sowie ein vom Verteilteller (15) mit zu entgasender Masse (5) beaufschlagtes heiz- und kühlbaren Dünnschicht-Entgasungssystem (16) vorgesehen sind, dadurch gekennzeichnet, dass die Welle (12) von oben in den Behälter (1) geführt ist, und dass die ersten (8) und die zweiten Rührelemente (22) an der Welle (12) befestigt sind.

2. Vorrichtung nach Anspruch 1, dadurch gekennzeichnet, dass die ersten Rührelemente (8) an einem in den Pufferraum (20) geführten, freien Ende der Welle (12) befestigt sind.

3. Vorrichtung nach Anspruch 1 oder 2, dadurch gekennzeichnet, dass im Boden (3) des Lagerraums (4) eine Durchführung für die Welle (12) angeordnet ist.

4. Vorrichtung nach Anspruch 3, dadurch gekennzeichnet, dass die Durchführung gasdicht ausgeführt ist.

5. Vorrichtung nach Anspruch 3 oder 4, dadurch gekennzeichnet, dass die Durchführung einen längs der Behälterachse (2) in den Lagerraum (4) geführten und oberhalb des Niveaus (10) der zu entgasenden Masse (5) endenden Rohrabschnitt (11) enthält.

6. Vorrichtung nach Anspruch 5, dadurch gekennzeichnet, dass der Rohrabschnitt (11) gas- und flüssigkeitsdicht in den Boden (3) des Lagerraums (4) eingeformt ist.

7. Vorrichtung nach Anspruch 5 oder 6, dadurch gekennzeichnet, dass der Rohrabschnitt (11) als Lager der Welle (12) ausgebildet ist.

8. Vorrichtung nach einem der Ansprüche 5 bis 7, dadurch gekennzeichnet, dass der zwischen der Wand des Behälters (1) und dem Rohrabschnitt (11) angeordnete Teil des Bodens (3) von aussen nach innen konusförmig vertieft ausgebildet ist und an einer an den Rohrabschnitt (11) angrenzenden tiefsten Stelle eine Öffnung (14) zum steuerbaren Abziehen von zu entgasender Masse (5) aufweist.

9. Vorrichtung nach einem der Ansprüche 3 bis 8, dadurch gekennzeichnet, dass der Boden (3) des Lagerraums (4) heizbar ausgebildet ist.

10. Vorrichtung nach einem der Ansprüche 1 bis 9, dadurch gekennzeichnet, dass die Wand des Behälters (1) im mittleren Behälterabschnitt (19) heiz- und kühlbar ausgebildet ist.

11. Vorrichtung nach Anspruch 10, dadurch gekennzeichnet, dass der Verteilteller (15) die zu entgasende Masse (5) sowohl auf das Dünnschicht-Entgasungssystems (16) als auch auf die Wand des Behälters (1) im mittleren Behälterabschnitt (19) führt.

12. Vorrichtung nach einem der Ansprüche 1 bis 11, dadurch gekennzeichnet, dass das Dünnschicht-Entgasungssystem (16) mindestens zwei Stufen (17, 18) aufweist, von denen eine unter dem Verteilteller (15) angeordnete obere Stufe (17) heizbar und eine unter der oberen Stufe (17) angeordnete untere Stufe (18) heiz- und kühlbar ausgebildet ist.
